# EUROPEAN PATENT SPECIFICATION

(11) **EP 0 561 623 B1**
(45) Date of publication and mention of the grant of the patent: **09.12.1998**
(21) Application number: 93302011.7
(22) Date of filing: 17.03.1993
(51) Int. Cl.: H02P 9/30, H02P 7/34

(54) **Dynamic current feedback magnetizing type shunt or series or compound DC motor-generator control circuit**
Gleichstrom-Nebenschluss oder Reihenschluss oder Compound-Motor-Generator mit dynamischer Strom-Feedback-Magnetisierung
Circuit de régulation pour un moteur-générateur shunt ou série ou compound avec aimantation dynamique à réaction de courant

(30) Priority: 18.03.1992 GB 9205865
(43) Date of publication of application: 22.09.1993
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- DE-A- 2 047 212
- GB-A- 649 556
- US-A- 3 867 678
- ELEKTROTECHNIK UND MASCHINENBAU vol. 87, no. 7 , July 1970 , WIEN AT pages 353 - 360 TH. HÖWER 'DIE K 13-SCHALTUNG UND IHRE ABWANDLUNGEN'

## Description

The present invention relates to a DC control circuit for controlling an electrical machine.

DE2047212 discloses a Ward-Leonard drive system in which a first AC motor drives a DC generator for rotation. The output of the generator is connected to a second DC motor such that the speed of rotation of the second DC motor is varied by regulating the current flowing through the field windings of the generator.

The present dynamic current feedback magnetizing type series or compound DC motor-generator control circuit relates to a shunt or series or compound motor having auxiliary shunt field winding and including at least one current-follower type DC motor that is running at high or low speed subject to the amount of current passing by the armature for driving an auxiliary generator to constitute a feedback unit, and electric energy generated from such auxiliary generator is leading to the auxiliary field of the main motor-generator, and the type for magnetizing the auxiliary field of the main motor-generator includes assistant exciting with same polarity as the field winding of the main motor-generator in which the general field is expanded in accordance with the main motor-generator armature current increasing, or differential magnetizing with different polarity against the field winding of the main motor-generator in which the general field is being reduced in response to main motor-generator armature current increasing. With a control interface we may control output voltage or output impedance from the auxiliary generator for controlling output current and further selecting assistant magnetizing or differential magnetizing of aforesaid main motor-generator auxiliary field winding against the main field; the present dynamic current feedback magnetizing type shunt or series or compound DC motor-generator control circuit is also applicable to a generator or dynamo motor, which may replace expensive magnetic saturation amplifier or other complicated solid and dynamo switch loop to become an independent dynamo, endurable and reliable control system.

An electrical machine DC control circuit for controlling an electrical machine of the type which is driven by electrical energy and has an auxiliary field winding according to the present invention comprises a current follower motor driven by the electrical energy from the electrical machine, an auxiliary generator driven by the current follower motor and producing an output, and a control interface for controlling the output of the auxiliary generator, wherein the output of the auxiliary generator is electrically coupled to the auxiliary field winding thereby providing a feedback to the auxiliary field winding, and thereby controlling the electrical machine.

### BRIEF DESCRIPTION OF THE INVENTION

FIG. 1 is a diagrammatic view showing the major elements of feedback unit of the present dynamic current feedback magnetizing type shunt or series or compound DC motor-generator control circuit.

FIG. 2 is a diagram showing an embodiment of circuit for the present dynamic current feedback magnetizing type shunt or series or compound DC motor-generator control circuit in which current-follower motor of feedback unit is series with armature using armature load current as the current for driving the motor.

FIG. 3 is a diagram showing an embodiment of circuit for the present dynamic current feedback magnetizing type shunt or series or compound DC motor-generator control circuit in which current-follower motor of feedback unit is parallel connected to the series winding of main motor and load current of main motor-generator forming voltage drop as the source of electric energy for driving the motor.

FIG. 4 is a diagram showing an embodiment of circuit for the present dynamic current feedback magnetizing type shunt or series or compound DC motor-generator control circuit in which current-follower motor of feedback unit is parallel connected to the armature of main motor-generator.

FIG. 5 is a diagram showing an embodiment of circuit for the present dynamic current feedback magnetizing type shunt or series or compound DC motor-generator control circuit in which current-follower motor of feedback unit is series with armature of auxiliary generator.

### DETAILED DESCRIPTION OF THE INVENTION

The conventional DC motor-generator set include dynamo motors and generators. In general, dynamo motors have speed control, torsion feedback compensation in accordance with load increase, of which speed control and torsion in accordance with the load increase are most common. Among the generators, the change in driving speed resulting in voltage change or positive/negative feedback of input current against output voltage are most common.

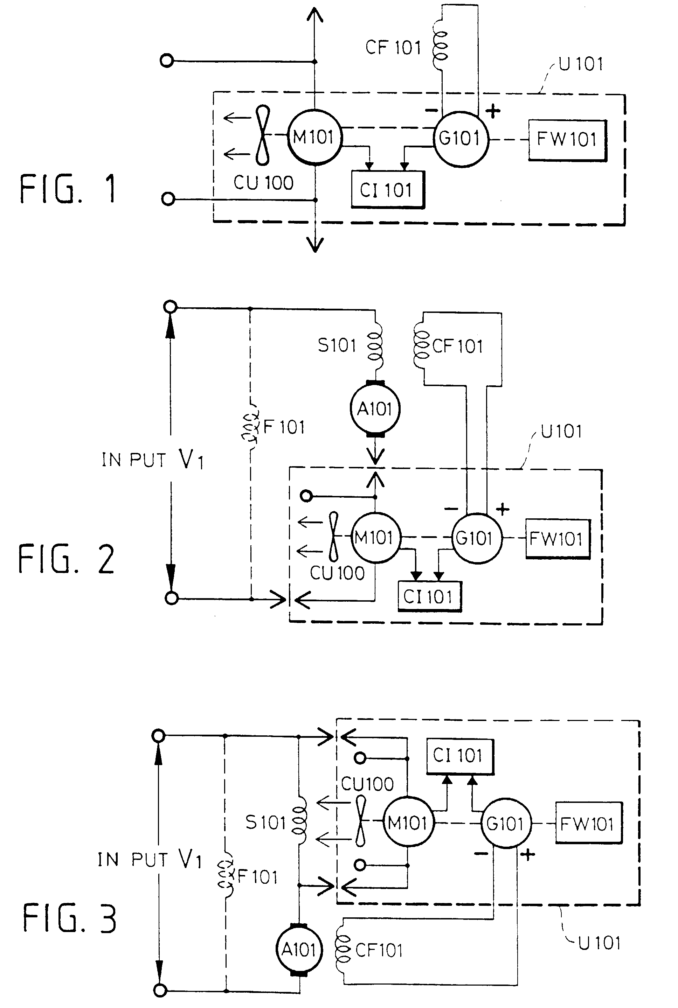

The present dynamic current feedback magnetizing type shunt series or compound DC motor-generator control circuit relates to a new design for the control system for the aforesaid DC motor-generator set, by using cheaper but reliable low power auxiliary motor and generator assembly for controlling the main motor-generator set with greater horsepower. The feature of the present dynamic current feedback magnetizing type series or compound DC motor-generator control circuit lies in good performance, high reliability and cheaper production cost comparing to the conventional magnetism magnified feedback or dynamo and solid magnified element type control system. The principle and system operation of the present dynamic current feedback magnetizing type shunt or series or compound DC motor-generator control circuit lies in that, it is driven by the external power source used for running the main motor-generator set, or mechanical rotary power source such as engine, fluid wheel wing or dynamo motor for driving the motor-generator when it is a generator set; when the main motor-generator set comprising aforesaid generator or dynamo motor, it can be a shunt or series or (compound) dynamo motor including main motor-generator armature (or series winding, and shunt winding together with its armature or power supply jointly parallel connected to main motor-generator armature when compound type is in use) and independently installed main motor-generator auxiliary field winding, and related mechanical structure such as end casing spindle bearing, etc. When main motor-generator set is motor, it accepts electric power input and gives electric energy output; when main motor-generator set is generator, it accepts mechanic power input and gives electric energy output; the present dynamic current feedback magnetizing type shunt or series or compound DC motor-generator control circuit relates to a feedback unit U101 comprising a feedback motor-generator set, the electric energy of motor of the motor-generator set depends on control performance, including the source from the main motor-generator set being driven by armature, or parallel connected to main motor armature or parallel connected to series field of main motor-generator to follow and produce electric energy for magnetizing the auxiliary field winding of main motor-generator. It comprises as FIG. 1, including:
follower motor M101: a series motor or shunt or permanent-magnet type or compound motor, its following electric energy may come from (1) such motor directly series with series winding or armature of the aforesaid main motor-generator or parallel connected to series winding or armature, if the follower motor is a series motor (2) its armature parallel connected to series winding and series with the armature, or series with series winding and parallel connected to the series winding or armature of the main motor-generator, if the follower motor is a shunt or permanent-magnet motor (3) its armature and series winding series with the armature of main motor-generator or parallel connected to the series winding or armature of the main motor-generator, if it is a compound motor;
auxiliary generator G101: driven by the aforesaid follower type motor M101 for producing relative generating capacity to running speed for magnetizing auxiliary field winding CF101 of the main motor, and the relation of generating capacity to running speed of main motor-generator may include direct ratio or inverse ratio subject to the wiring relationship between the follower motor and the main motor-generator; such generator may comprise a DC or AC generator and rectifier;
control interface CI101: provided for connecting the output voltage or current value for controlling the auxiliary generator, including follower motor driving power control, or series with auxiliary generator armature or adjustable impedance series with the armature or field (if available) output end, or linear or switch type driving element series with armature or field (if available) output end, and another end connecting manual or electro-control signal input/output.

The principle and application of the present design is described as follows:

As shown in FIG. 2, it is a diagram showing an embodiment of circuit for the present dynamic current feedback magnetizing type shunt or series or compound DC motor-generator control circuit in which current-follower motor of feedback unit is series with armature using armature load current as the current for driving the motor, and it is characterized in that:
the main motor-generator set is a shunt or series motor including series field winding S101 and armature A101, or a compound motor further including shunt field winding F101, and in addition to having auxiliary field winding CF101 for accepting feedback unit U101 control;
follower motor M101 of feedback unit U101 is series with the armature A101 of the main motor-generator, if excessive current occurs on the armature of main motor-generator, the follower motor can be parallel connected to the shunt for proportional match and then jointly series with the armature of the main motor-generator;
auxiliary generator G101 is being driven by the aforesaid follower type motor M101 for producing relative generating capacity to running speed to magnetize auxiliary field winding CF101 of the main motor, and the relation of generating capacity to running speed of main motor-generator may include direct ratio or inverse ratio subject to the wiring relationship between the follower motor and the main motor-generator; such generator may comprise a DC or AC generator and rectifier;
control interface CI101 is provided for connecting the output voltage or current value for controlling the auxiliary generator, including follower motor driving power control or series with the armature or adjustable impedance on output end of field (if available), or linear or switch type driving element series with armature or field (if available) output end, and another end connecting manual or electro-control signal input/output.

As shown in FIG. 3, it is a diagram showing an embodiment of circuit for the present dynamic current feedback magnetizing type shunt or series or compound DC motor-generator control circuit in which current-follower motor of feedback unit is parallel connected to the series winding of main motor and load current of main motor-generator forming voltage drop as the source of electric energy for driving the motor, and it is characterized in that:
the main motor-generator set is a series motor including series field winding S101 and armature A101, or a compound motor further including shunt field winding F101, and in addition to having auxiliary field winding CF101 for accepting feedback unit U101 control;
follower motor M101 of feedback unit U101 is parallel connected to the series winding S101 of the main motor-generator, when the main motor-generator passing the greater current by the series winding, a larger voltage drop Es is formed on each side of the series winding to increase end voltage and running speed of follower motor M101 that is parallel connected to the series winding, its match with series winding including to select series winding S101 for selecting the tap or follower motor series with drop element or parallel connected to shunt element;
auxiliary generator G101 is being driven by the aforesaid follower type motor M101 for producing relative generating capacity to series winding drop to magnetize auxiliary field winding CF101 of the main motor, and the relation of generating capacity to running speed of main motor-generator may include direct ratio or inverse ratio subject to the wiring relationship between the follower motor and the main motor-generator; such generator may comprise a DC or AC generator and rectifier (such generator may be DC type generator, or AC type generator plus rectifier device);
control interface CI101 is provided for connecting the output voltage or current value for controlling the auxiliary generator, including follower motor driving power control or series with auxiliary generator armature or the adjustable impedance series on output end of field (if available), or linear or switch type driving element series with armature or field (if available) output end, and another end connecting manual or electro-control signal input/output.

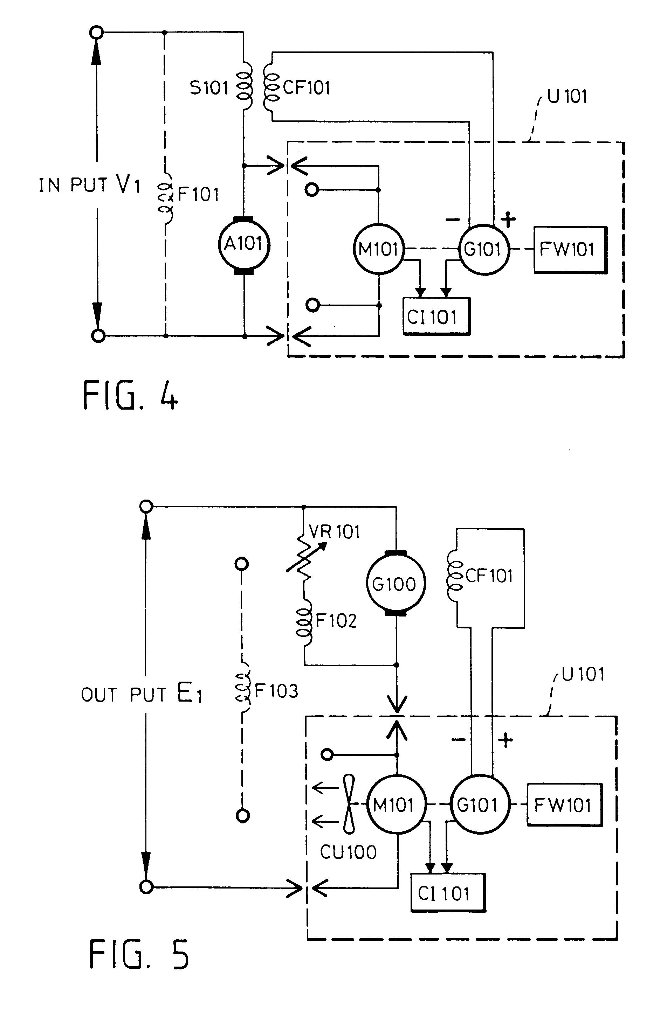

As shown in FIG. 4, it is a diagram showing an embodiment of circuit for the present dynamic current feedback magnetizing type shunt or series or compound DC motor-generator control circuit in which current-follower motor of feedback unit is parallel connected to the armature of main motor-generator, it is characterized in that:
the main motor-generator set is a series motor including series field winding S101 and armature A101, or a compound motor further including shunt field winding F101, and in addition to having auxiliary field winding CF101 for accepting feedback unit U101 control, follower motor control or armature drop match can be accomplished by means of series with drop element;
follower motor M101 of feedback unit U101 is parallel connected to the armature A101 of the main motor-generator to form that, follower motor driving energy is following the end voltage of main motor-generator armature;
auxiliary generator G101 is being driven by the aforesaid follower type motor M101 for producing relative generating capacity to running speed to magnetize auxiliary field winding CF101 of the main motor, and the relation of generating capacity to running speed of main motor-generator may include direct ratio or inverse ratio subject to the wiring relationship between the follower motor and the main motor-generator (such generator may be DC type generator, or AC type generator plus rectifier device);
control interface CI101 is provided for connecting the output voltage or current value for controlling the auxiliary generator, including follower motor driving power or series with auxiliary generator armature or the adjustable impedance series with output end of field (if available), or linear or switch type driving element series with armature or field (if available) output end, and another end connecting manual or electro-control signal input/output.

As shown in FIG. 5, it is a diagram showing an embodiment of circuit for the present dynamic current feedback magnetizing type series or compound DC motor-generator control circuit in which current-follower motor of feedback unit is series with armature of auxiliary generator, and it is characterized in that:
the main motor-generator set includes self-excited field winding F102 or meanwhile including exciting field winding F103 and generator armature G100, and further including auxiliary field winding CF101 for accepting feedback unit U101 control;
follower motor M101 of feedback unit U101 is series with the armature, if excessive current occurs on the armature of main motor-generator, the follower motor can be parallel connected to the shunt and then jointly series with the armature of the main motor-generator;
auxiliary generator G101 is being driven by the aforesaid follower type motor M101 for producing relative generating capacity to running speed to magnetize auxiliary field winding CF101 of the main motor, and the relation of generating capacity to running speed of main motor-generator may include direct ratio or inverse ratio subject to the wiring relationship between the follower motor and the main motor-generator; such generator may be a DC type generator, or AC type generator plus rectifier device;
control interface CI101 is provided for connecting the output voltage or current value for controlling the auxiliary generator, including the adjustable impedance series with the armature or field (if available) output end, or linear or switch type driving element series with armature or field (if available) output end, and another end connecting manual or electro-control signal input/output.

The aforesaid auxiliary generator unit may form a feedback relation to the main motor-generator set, and for real application we may add mounting mechanical flywheel FW101 on the auxiliary unit or parallel connecting capacitance to the output end of the auxiliary generator unit for regulating response relation between the auxiliary field winding and the main motor-generator; moreover the embodiments as shown in aforesaid FIGs. 2, 3 and 5, electric energy of follower motor is increasing in accordance with armature current of the main motor-generator to increase the follower motor power and to increase running speed or torsion. We may further use follower motor for driving the cool air pump CU100 of the main motor-generator to form the characteristics in that, cool flow is being changed depending the current value of main motor-generator armature, and such application can be combined to the original auxiliary motor-generator set or independently comprises follower motor and cool pump assembly.

Referring to aforesaid applications, whatever the main motor-generator is a motor or a generator, we may select necessary feedback control function according to the following relations: (1) to select the follower motor of feedback unit for accepting feedback electric energy from the main motor-generator, including from the armature current, from series winding, from armature EMF, or multiple feedback units being driven by feedback electric energy from aforesaid various sources, or a multiple feedback electric energy to drive a same feedback unit to form various kinds of following relations between with the main motor-generator; (2) auxiliary generator set is of different choice such as series, shunt and compound type and different characteristics such as current, voltage and output; (3) auxiliary generator and auxiliary field winding of main motor-generator set to form a polar relation with the original magnetic polarity of the main motor-generator set, either assistant exciting of same polarity or differential exciting of counter polarity; (4) control interface to control the polarity of output current/voltage of feedback unit.

Based on the selection of aforesaid conditions, we may enable the present dynamic current feedback magnetizing type shunt or series or compound DC motor-generator control circuit to gain different characteristics with the conventional motor-generator and to provide a choice for engineering purpose.

## Claims

1. An electrical machine DC control circuit (U101) for controlling electrical machines (A101, S101 or G100, F102) of the type which are driven by electrical energy and have an auxiliary field winding (CF101), the DC control circuit comprising a current follower motor (M101) driven by the electrical energy from the electrical machine, an auxiliary generator (G101) driven by the current follower motor and producing an output, and a control interface (CI101) for controlling the output of the auxiliary generator, wherein the output of the auxiliary generator is electrically coupled to the auxiliary field winding (CF101) thereby providing a feedback to the auxiliary field winding, and thereby controlling the electrical machine.

2. A DC control circuit as claimed in claim 1, wherein the electrical machine comprises a generator having an armature (G100), the current follower motor (M101) being connected in series with the armature of the generator.

3. A DC control circuit as claimed in claim 1, wherein the electrical machine comprises a main motor connected to the auxiliary generator (G101).

4. A DC control circuit as claimed in claim 1, wherein the electrical machine comprises a main motor having an armature (A101) and a series field winding (S101).

5. A DC control circuit as claimed in claim 4, wherein the current follower motor (M101) is connected in series with the armature (A101) of the main motor.

6. A DC control circuit as claimed in claim 4, wherein the current follower motor (M101) is connected in parallel with the series field winding (S101) of the main motor.

7. A DC control circuit as claimed in claim 4, wherein the current follower motor (M101) is connected in parallel with the armature (A101) of the main motor.

8. A DC control circuit as claimed in claim 1, wherein the electrical machine comprises a generator (G100) connected in series with the current follower motor (M101).

9. An electrical machine having an auxiliary field winding (CF101) controlled by a control circuit (U101) according to claim 1.

## Patentansprüche

1. DC-Steuerschaltkreis (U101) für eine elektrische Maschine zum Steuern elektrischer Maschinen (A101, S101 oder G100, F102) des Typs, der durch elektrische Energie angetrieben wird und eine Hilfs-Feld-Wicklung (CF101) besitzt, wobei der DC-Steuerschaltkreis einen Strom-Nachlauf-Motor (M101), der durch die elektrische Energie von der elektrischen Maschine angetrieben wird, einen Hilfs-Generator (G101), der durch den Strom-Nachlauf-Motor angetrieben wird und einen Ausgang produziert, und eine Steuerschnittstelle (CI101) zum Steuern des Ausgangs des Hilfs-Generators aufweist, wobei der Ausgang des Hilfs-Generators elektrisch mit der Hilfs-Feld-Wicklung (CF101) gekoppelt ist, um dadurch eine Rückkopplung zu der Hilfs-Feld-Wicklung zu schaffen und dadurch die elektrische Maschine zu steuern.

2. DC-Steuerschaltkreis nach Anspruch 1, wobei die elektrische Maschine einen Generator aufweist, der einen Anker (G100) besitzt, wobei der Strom-Nachlauf-Motor (M101) in Serie mit dem Anker des Generators verbunden ist.

3. DC-Steuerschaltkreis nach Anspruch 1, wobei die elektrische Maschine einen Haupt-Motor aufweist, der mit dem Hilfs-Generator (G101) verbunden ist.

4. DC-Steuerschaltkreis nach Anspruch 1, wobei die elektrische Maschine einen Haupt-Motor aufweist, der einen Anker (A101) und eine Serien-Feld-Wicklung (S101) besitzt.

5. DC-Steuerschaltkreis nach Anspruch 4, wobei der Strom-Nachlauf-Motor (M101) in Serie mit dem Anker (A101) des Haupt-Motors verbunden ist.

6. DC-Steuerschaltkreis nach Anspruch 4, wobei der Strom-Nachlauf-Motor (M101) parallel in Serie mit der Wicklung (S101) des Haupt-Motors verbunden ist.

7. DC-Steuerschaltkreis nach Anspruch 4, wobei der Strom-Nachlauf-Motor (M101) parallel zu dem Anker (A101) des Haupt-Motors verbunden ist.

8. DC-Steuerschaltkreis nach Anspruch 1, wobei die elektrische Maschine einen Generator (G100) aufweist, der in Serie mit dem Strom-Nachlauf-Motor (M101) verbunden ist.

9. Elektrische Maschine, die eine Hilfs-Feld-Wicklung (CF101), die durch einen Steuerschaltkreis (U101) gesteuert ist, gemäß Anspruch 1 besitzt.

## Revendications

1. Circuit de commande (U101) à courant-continu pour machine électrique destiné à commander des machines électriques (A101, S101 ou G100, F102) du type qui sont excitées par de l'énergie électrique et ont un enroulement inducteur auxiliaire (CF101), le circuit de commande à courant-continu comportant un moteur-suiveur de courant (M101) excité par l'énergie électrique provenant de la machine électrique, un générateur auxiliaire (G101) entraîné par le moteur-suiveur de courant et produisant une sortie, et une interface de commande (CI101) destinée à commander la sortie du générateur auxiliaire, dans lequel la sortie du générateur auxiliaire est électriquement couplée à l'enroulement inducteur auxiliaire (CF101) pour asservir l'enroulement inducteur auxiliaire et, par conséquent, commander la machine électrique.

2. Circuit de commande à courant-continu selon la revendication 1, dans lequel la machine électrique comprend un générateur ayant un induit (G100), le moteur-suiveur de courant (M101) étant monté en série avec l'induit du générateur.

3. Circuit de commande à courant-continu selon la revendication 1, dans lequel la machine électrique comprend un moteur principal relié au générateur auxiliaire (G101).

4. Circuit de commande à courant-continu selon la revendication 1, dans lequel la machine électrique comprend un moteur principal ayant un induit (A101) et un enroulement inducteur série (S101).

5. Circuit de commande à courant-continu selon la revendication 4, dans lequel le moteur-suiveur de courant (M101) est monté en série avec l'induit (A101) du moteur principal.

6. Circuit de commande à courant-continu selon la revendication 4, dans lequel le moteur-suiveur de courant (M101) est monté en parallèle avec l'enroulement inducteur série (S101) du moteur principal.

7. Circuit de commande à courant-continu selon la revendication 4, dans lequel le moteur-suiveur de courant est monté en parallèle avec l'induit (A101) du moteur principal.

8. Circuit de commande à courant-continu selon la revendication 1, dans lequel la machine électrique comporte un générateur (G100) monté en série avec le moteur-suiveur de courant (M101).

9. Machine électrique ayant un enroulement inducteur auxiliaire (CF101) commandé par un circuit de commande (U101) selon la revendication 1.
